# DEMANDE DE BREVET EUROPEEN

(11) **EP 1 086 879 A1**
(43) Date de publication de la demande: **28.03.2001**
(21) Numéro de dépôt: 00402592.0
(22) Date de dépôt: 19.09.2000
(51) Int. Cl.: B62D 1/184

(54) **Dispositif de blocage en position d'un ensemble de colonne de direction réglable de véhicule**

(30) Priorité: 23.09.1999 FR 9911897
(71) Demandeur: Ecia Industrie, 92100 Boulogne-Billancourt (FR)
(72) Inventeur: Duchene, Jean-Marc, 25600 Sochaux (FR)
(74) Mandataire: Habasque, Etienne Joel Jean-François

(57) **Abrégé**

Ce dispositif de blocage en position d'un ensemble de colonne de direction réglable de véhicule, dans lequel l'ensemble de colonne (1) comporte une pièce de montage (2) déplaçable le long d'une course de réglage par rapport à une structure de fixation (3) de celui-ci sur le véhicule, est caractérisé en ce qu'il comporte au moins un système à pignon-crémaillère (11) s'étendant le long de la course de réglage de l'ensemble de colonne et dont l'un des éléments, pignon (12) ou crémaillère (14), est associé à l'une des pièces, pièce de montage (2) ou structure de fixation (3) et l'autre, crémaillère (14) ou pignon (12), à l'autre pièce, structure de fixation (3) ou pièce de montage (2), et en ce qu'il est prévu des moyens (8,9,10) de blocage en rotation du pignon pour bloquer en position l'ensemble de colonne par rapport à la structure de fixation.

## Description

La présente invention concerne un dispositif de blocage en position d'un ensemble de colonne de direction réglable de véhicule automobile.

Plus particulièrement, l'invention se rapporte à un dispositif de blocage pour un ensemble de colonne qui comporte une pièce de montage déplaçable le long d'une course de réglage par rapport à une structure de fixation de cet ensemble de colonne sur le reste de ce véhicule.

On sait que de façon générale, les dispositifs de blocage de ce type peuvent comporter un tirant s'étendant entre des flasques de cette structure de fixation, ce tirant étant associé à des moyens de verrouillage en position de l'ensemble de colonne par rapprochement des flasques et donc serrage de ceux-ci autour de la pièce de montage.

Cependant, ce type de structures présente un certain nombre d'inconvénients, notamment au niveau du maintien en position de l'ensemble de colonne lorsque des efforts importants sont appliqués sur celui-ci.

Le but de l'invention est donc de résoudre ces problèmes.

A cet effet, l'invention a pour objet un dispositif de blocage en position d'un ensemble de colonne de direction réglable de véhicule automobile, dans lequel l'ensemble de colonne comporte une pièce de montage déplaçable le long d'une course de réglage par rapport à une structure de fixation de celui-ci sur le reste du véhicule, caractérisé en ce qu'il comporte au moins un système à pignon-crémaillère s'étendant le long de la course de réglage de l'ensemble de colonne et dont l'un des éléments, pignon ou crémaillère, est associé à l'une des pièces, pièce de montage ou structure de fixation et l'autre, crémaillère ou pignon, à l'autre pièce, structure de fixation ou pièce de montage, en ce qu'il est prévu des moyens de blocage en rotation du pignon pour bloquer en position l'ensemble de colonne par rapport à la structure de fixation, et en ce que le pignon du système à pignon-crémaillère comporte une denture et un voile de part et d'autre duquel sont ménagées des surfaces de friction adaptées pour coopérer avec le flasque et la pièce de montage, s'étendant au-delà de la denture de celui-ci.

L'invention sera mieux comprise à la lecture de la description qui va suivre, donnée uniquement à titre d'exemple et faite en se référant aux dessins annexés, sur lesquels :
- la Fig.1 représente une vue en coupe schématique illustrant la structure d'un exemple de réalisation d'un dispositif de blocage selon l'invention; et
- la Fig.2 représente une vue de coté d'un flasque d'une structure de fixation.

On a en effet représenté sur ces figures, un dispositif de blocage en position d'un ensemble de colonne de direction réglable de véhicule automobile, désigné par la référence générale 1.

Cet ensemble de colonne 1 comporte une pièce de montage désignée par la référence générale 2, déplaçable le long d'une course de réglage par rapport à une structure de fixation 3 de celui-ci sur le reste du véhicule.

Dans l'exemple de réalisation représenté, cette pièce de montage est montée déplaçable entre des flasques 4 et 5 de la structure de fixation 3, ces flasques s'étendant parallèlement l'un à l'autre et comportant des lumières par exemple verticales, respectivement 6 et 7, permettant un réglage en position angulaire de l'ensemble de colonne.

Bien entendu, des lumières horizontales peuvent être ménagées dans ces flasques pour permettre un réglage en position axiale de l'ensemble de colonne.

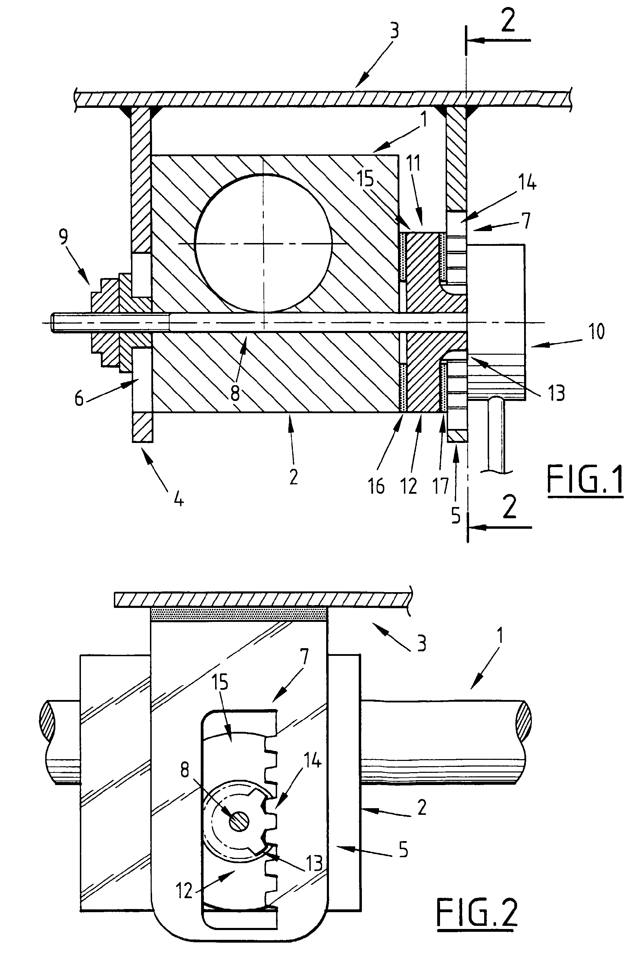

De plus, ce dispositif peut comporter un tirant désigné par la référence générale 8 sur la figure 1, ce tirant s'étendant entre les flasques 4 et 5 de la structure de fixation 3 et traversant la pièce de montage 2.

L'une des extrémités de ce tirant 8 est associée à des moyens d'appui sur le flasque correspondant, par exemple 6, ces moyens étant désignés par la référence générale 9, tandis que l'autre extrémité de celui-ci est associée à des moyens de verrouillage en position de l'ensemble de colonne, désignés par la référence générale 10, adaptés pour prendre appui sur l'autre flasque 5 de la structure de fixation.

Ces moyens de verrouillage sont en effet adaptés pour bloquer l'ensemble de colonne et plus particulièrement la pièce de montage 2 en position par rapprochement des flasques et serrage de ceux-ci autour de la pièce de montage.

Selon l'invention, ce dispositif de blocage comporte également au moins un système à pignon-crémaillère, désigné par la référence générale 11 sur la figure 1, qui s'étend le long de la course de réglage de l'ensemble de colonne et dont l'un des éléments, pignon ou crémaillère, est associé à l'une des pièces, pièce de montage ou structure de fixation, et l'autre élément, crémaillère ou pignon, à l'autre pièce, structure de fixation ou pièce de montage.

De plus, il est prévu des moyens de blocage en rotation du pignon pour bloquer en position l'ensemble de colonne par rapport à la structure de fixation.

Dans l'exemple de réalisation représenté sur ces figures, le pignon 12 de ce système à pignon-crémaillère est porté par le tirant 8 et est monté déplaçable à rotation autour de celui-ci.

Ce pignon comporte alors une denture 13 adaptée pour coopérer avec une crémaillère correspondante 14 ménagée le long de la lumière 7 du flasque correspondant 5, lors des réglages en position angulaire de l'ensemble de colonne.

Ce pignon comporte également un voile désigné par la référence générale 15 sur la figure 1, de part et d'autre duquel sont ménagées des surfaces de friction, qui sont donc adaptées pour coopérer l'une avec la pièce de montage 2 et l'autre, avec le flasque 5, lorsque les moyens de verrouillage 10 sont déplacés par exemple sous le contrôle de l'utilisateur, en position active de verrouillage de l'ensemble de colonne.

Dans ce cas, les flasques sont serrés autour de la pièce de montage, ce qui permet d'immobiliser en rotation le pignon 12 par serrage de celui-ci entre le flasque 5 et la pièce de montage 2.

On notera à cet égard que les surfaces de friction du voile 15 du pignon 12 s'étendent au-delà de la denture 13 de celui-ci par rapport à l'axe du tirant 8.

On conçoit en effet que lorsque les moyens de verrouillage 10 sont en position escamotée de déverrouillage de l'ensemble de colonne, le pignon 12 peut tourner autour du tirant 8 pour suivre les déplacements de la pièce de montage 2 et de l'ensemble de colonne 1 lors des réglages en position de celui-ci, en coopérant avec la crémaillère correspondante 14.

Par contre, lorsque les moyens de verrouillage 10 sont déplacés vers leur position active de blocage de l'ensemble de colonne, le pignon 12 est bloqué en rotation sur le tirant 8 par serrage entre le flasque 5 et la pièce de montage 2.

Ceci interdit alors tout déplacement de l'ensemble de colonne et de la pièce de montage par rapport à la structure de fixation même en cas d'application d'efforts importants sur cet ensemble.

Le blocage en rotation du pignon peut encore être amélioré en utilisant des rondelles de friction 16,17 de chaque coté du voile de celui-ci.

Il va de soi bien entendu que différents modes de réalisation de ce dispositif de blocage peuvent être envisagés.

Ainsi par exemple, deux systèmes à pignon-crémaillère symétriques peuvent être prévus de part et d'autre de la pièce de montage 2, entre celle-ci et les flasques respectifs.

Par ailleurs, dans l'exemple de réalisation représenté sur ces figures, le réglage en position de l'ensemble de colonne est un réglage en position angulaire.

Il va de soi bien entendu qu'un réglage en position axiale peut également être envisagé, les lumières des flasques étant alors par exemple des lumières parallèles à l'axe de l'ensemble de colonne.

Des dispositions autres que celle représentée du système à pignon-crémaillère peuvent également être envisagées.

## Revendications

1. Dispositif de blocage en position d'un ensemble de colonne de direction réglable de véhicule automobile, dans lequel l'ensemble de colonne (1) comporte une pièce de montage (2) déplaçable le long d'une course de réglage par rapport à une structure de fixation (3) de celui-ci sur le reste du véhicule, caractérisé en ce qu'il comporte au moins un système à pignon-crémaillère (11) s'étendant le long de la course de réglage de l'ensemble de colonne et dont l'un des éléments, pignon (12) ou crémaillère (14), est associé à l'une des pièces, pièce de montage (2) ou structure de fixation (3) et l'autre, crémaillère (14) ou pignon (12), à l'autre pièce, structure de fixation (3) ou pièce de montage (2), en ce qu'il est prévu des moyens (8,9,10) de blocage en rotation du pignon (12) pour bloquer en position l'ensemble de colonne par rapport à la structure de fixation, et en ce que le pignon (12) du système à pignon-crémaillère (11) comporte une denture (13) et un voile (15) de part et d'autre duquel sont ménagées des surfaces de friction adaptées pour coopérer avec le flasque (5) et la pièce de montage (2), s'étendant au-delà de la denture (13) de celui-ci.

2. Dispositif selon la revendication 1, caractérisé en ce que la structure de fixation (3) comporte deux flasques (4,5) entre lesquels est interposée la pièce de montage (2), en ce que le pignon (12) est interposé entre l'un (5) de ces flasques et cette pièce de montage (2) et en ce que les moyens de blocage en position comprennent des moyens d'immobilisation du pignon (12) par serrage de celui-ci entre le flasque (5) et la pièce de montage (2) par rapprochement de ces pièces.

3. Dispositif selon la revendication 2, caractérisé en ce que les moyens de blocage comprennent un tirant (8) s'étendant entre les flasques (4,5) de la structure de fixation (3) et dont l'une des extrémités comporte des moyens (9) d'appui sur l'un des flasques et l'autre, des moyens (10) de verrouillage déplaçables sous le contrôle d'un utilisateur, entre des positions active de verrouillage et escamotée de déverrouillage de l'ensemble en position.

4. Dispositif selon l'une quelconque des revendications précédentes, caractérisé en ce que le voile est associé à des rondelles de friction (16,17) disposées de part et d'autre de celui-ci.

5. Dispositif selon la revendication 3 ou 4, caractérisé en ce que le pignon (12) est monté rotatif sur le tirant (8).

6. Dispositif selon l'une quelconque des revendications 3 à 5, caractérisé en ce que la crémaillère (14) est ménagée dans une lumière (7) du flasque correspondant (5).
